# EUROPEAN PATENT SPECIFICATION

(11) **EP 3 318 519 B1**
(45) Date of publication and mention of the grant of the patent: **21.02.2024**
(21) Application number: 17197522.0
(22) Date of filing: 20.10.2017
(51) Int. Cl.: B65H 1/02

(54) **AN ALIGMENT DEVICE, CORRESPONDING INFEED OR FILLING MACHINE, AND METHOD FOR ALIGNING A STACK OF CARTON BLANKS**
AUSRICHTUNGSVORRICHTUNG, ENTSPRECHENDE ZUFÜHR- ODER FÜLLMASCHINE, UND VERFAHREN ZUR AUSRICHTUNG EINES STAPELS VON KARTONZUSCHNITTEN
DISPOSITIF D'ALIGNEMENT, MACHINE D'ALIMENTATION OU DE REMPLISSAGE CORRESPONDANTE, ET PROCÉDÉ DESTINÉ À ALIGNER UNE PILE D'ÉBAUCHES DE CARTON

(30) Priority: 04.11.2016 EP 16197400
(43) Date of publication of application: 09.05.2018
(73) Proprietor: Tetra Laval Holdings & Finance S.A., 1009 Pully (CH)
(72) Inventor: PERSSON, Richard, SE 261 73 Häljarp (SE)
(74) Representative: Tetra Pak - Patent Attorneys SE

(56) References cited:
- WO-A1-2007/005589
- WO-A1-2013/184295
- GB-A- 1 558 688
- RU-C2- 2 179 943
- US-A- 4 919 414
- US-A- 4 927 321

## Description

### Technical field

The present disclosure relates to an alignment device for a stack of carton blanks to be used in a filling machine.

### Background

When producing carton packages a filling machine which can fold and fill a substance such as a liquid or semi-liquid is used. The filling machine can use different types of base materials and shapes of the base material. A type of packages is produced by using carton blanks as the base shape and which is then folded and filed with a desired substance. These carton blanks are normally made and shipped in boxes to a location of the filling machine so that they can be loaded into the machine by an infeed device. Since the carton blanks are made somewhere else and shipped to the location of the filling machine it is not always the same batch that is used one after the other but more normally an operator just loads the next stacked carton blank box that is on a pallet. It is also so that inside the box the carton blanks can somewhat move and thus be shifted around. There is also a tolerance of how much variation each blank can have in thickness and height. Today an operator is standing by the infeed device and filling machine to visually check so that the carton blanks are loaded correctly in the infeed device from the box and distributed to the filing machine. And, if something goes wrong which normally has to do with the stack of carton blanks being miss-aligned or other related types of effects of the carton blanks, the operator needs to solve it by manually stopping the machine and handling the carton blank or blanks. This is time consuming and stops the running of the filing machine in an unwanted way which leads to a loss of production.

Further prior art is reflected by patent documents GB1558688, US4919414A and US4927321A.

Hence, an improved alignment device which solves at least some or all of the above drawbacks is desired.

### Summary

It is an object of the present inventive concept to mitigate, alleviate, or eliminate one or more of the above-identified deficiencies in the art and disadvantages singly or in combination.

According to the invention an alignment device, an infeed machine for a filling machine or a filling machine comprising the alignment device, and a method of aligning a stack of carton blanks in parallel are provided according to the appended claims.

Some examples of the disclosure provide for alignment members to provide forces on carton blanks.

Some examples of the disclosure provide for an alignment member which can easily roll on carton blanks.

Some examples of the disclosure provide for pushing in a perpendicular direction to a length of a carton blank stack.

Some examples of the disclosure provide for contacting at least a part of the height of the carton blank.

Some examples of the disclosure provide for contacting at least one carton blank.

Some examples of the disclosure provide for at the same time align several carton blanks at once.

Some examples of the disclosure provide for a lower force of aligning than if aligning all or almost all of the carton blanks at the same time.

Some examples of the disclosure provide for a contact surface being the height of a carton blank.

Some examples of the disclosure provide for a pair of rollers that easily slides on the carton blank(s).

Some examples of the disclosure provide for perpendicularly moving and aligning a carton blank or blanks.

Some examples of the disclosure provide for a first and second alignment member being spaced in a length direction of a carton blank stack.

Some examples of the disclosure provide for a first and second alignment member being spaced so that a small non-contacting surface between them is created.

Some examples of the disclosure provide for a first alignment member pushing on a first edge of a carton blank and a second alignment member pushing on a second edge of a carton blank.

Some examples of the disclosure provide for an alignment device adapted to align carton blanks that have a high degree of twisting or otherwise is not parallel arranged in a stack of carton blanks.

Some examples of the disclosure provide for a simpler alignment device.

Some examples of the disclosure provide for an alignment device comprising a surface on which carton blanks can slide on.

Some examples of the disclosure provide for a surface that easily allows for carton blanks to move against when being pushed by an alignment device.

Some examples of the disclosure provide for carton blanks to more easily be aligned since the carton blanks can easily move in a length direction of the carton blanks stack.

Some examples of the disclosure provide for an alignment device that allows for carton blanks to be pushed against and at the same time slide on, without making any marks in the carton blank.

Some examples of the disclosure provide for an alignment device which covers a part of the height of a carton blank so that the carton blank can more easily be moved in a length direction.

Some examples of the disclosure provide for a lower friction between a carton blank and a first and/or second alignment member.

Some examples of the disclosure provide for a first and second alignment member being slidably connected by a sliding mechanism.

Some examples of the disclosure provide for a sliding mechanism that allows a first alignment member to move along a stack of carton blanks.

Some examples of the disclosure provide for pushing on both sides of a carton blank.

Some examples of the disclosure provide for any movement of the first alignment member affecting at least the other one.

Some examples of the disclosure provide for a translation of force from the first alignment member to the other(s).

Some examples of the disclosure provide for motorizing and/or automating an alignment device for aligning carton blanks.

Some examples of the disclosure provide for a gripping member so that an operator can easily manually use an alignment device.

Some examples of the disclosure provide for a safety back up.

Some examples of the disclosure provide for moving at least one carton blank.

Some examples of the disclosure provide for pushing and/or pulling in a substantially length direction of the stacked carton blanks.

Some examples of the disclosure provide for sliding by a sliding mechanism a first alignment member in a parallel direction to carton blanks.

All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention/inventive concept, will be better understood through the following illustrative and non-limiting detailed description of different embodiments of the present invention/inventive concept, with reference to the appended drawings, wherein:
Figure 1a illustrates a front view of a manual alignment device not according to the claimed invention.
Figure 1b illustrates a side view of a manual alignment device not according to the claimed invention.
Figure 2a illustrates stacked carton blanks arranged in shifted style.
Figure 2b illustrates stacked aligned carton blanks.
Figure 3a illustrates a top-side view of a manual alignment device not according to the claimed invention.
Figure 3b illustrates a bottom view of a manual alignment device not according to the claimed invention.
Figure 4a illustrates a side view of an automatic alignment device.
Figure 4b illustrates a top view of an automatic alignment device.
Figure 5a illustrates a front-side view of an automatic alignment device.
Figure 5b illustrates a back-side view of an automatic alignment device.
Figure 6a illustrates a top-side view of a manual alignment device on a stack of carton blanks, not according to the claimed invention.
Figure 6b illustrates a side view of an automatic alignment device on a stack of carton blanks.
Figure 7 illustrates a flow chart of a method of using an alignment device.

### Detailed description

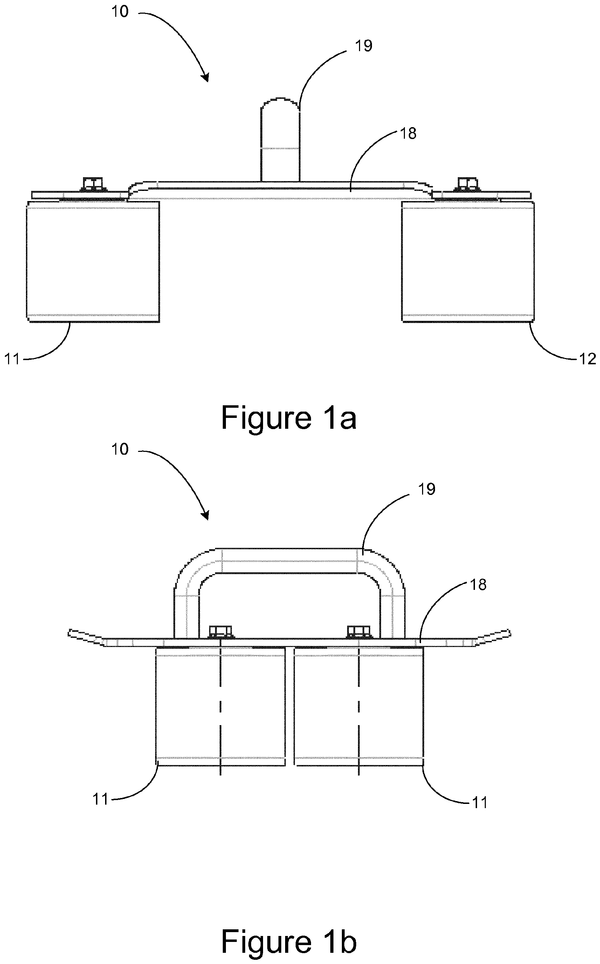

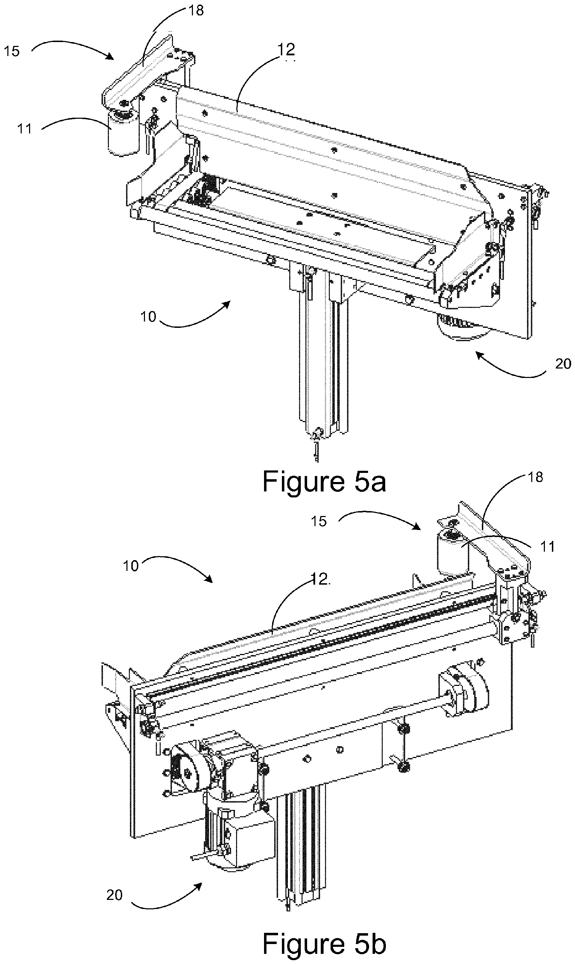

Figs. 1a-1b, 3a-6b illustrates examples of an alignment device for aligning stacked carton blanks 14. The carton blank 14 comprises a first edge 141 and a second edge 444 wherein the second edge is positioned opposite the first edge. The alignment device comprises at least a first 11 and a second 12 alignment member. The first alignment member 11 is arranged adjacent to the first edge 141 and adapted to exert a force onto the first edge 141 and wherein the second alignment member 12 is arranged adjacent the second edge and adapted to exert a force onto the second edge, and the first alignment member 11 is a roller. By having two alignment members 11, 12 which are adapted to provide forces on the carton blanks and one of them being a roller 11 that can easily roll on the carton blanks 14 so that they are pushed in a perpendicular direction to a length X of the carton blank 14 stack. Thus aligning the carton blank 14 stack.

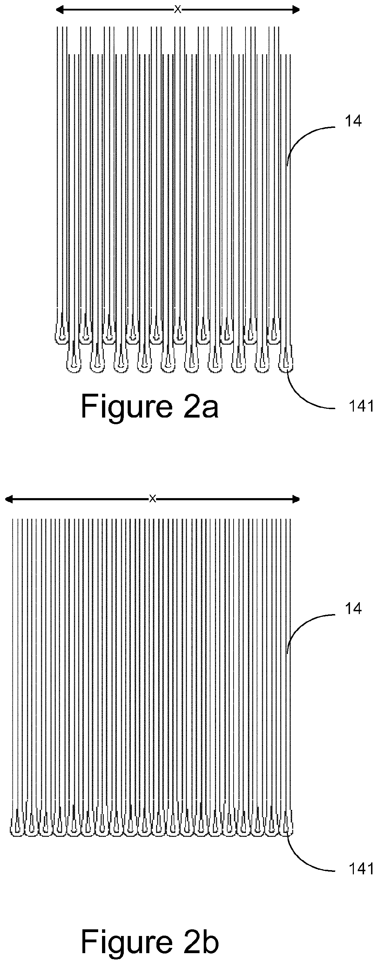

As disclosed above and illustrated in figures 2a and 2b, the carton blanks 14 are stacked in a box and shipped to the filling machine. When arriving at the filling machine the carton blanks 14 can be stacked as disclosed in figure 2a. Thus they are shifted next to each other. This means that the stack has a certain length X. As also can be seen in these figures 2a and 2b the shape of the carton blank 14 is such that it is a bit wider at the first 11 and second 12 edges since the carton blank 14 is folded, than the middle of the carton blank 14. This means that there is a natural tendency to also be arranged in this shifted style of the carton blanks 14 as illustrated in figure 2a. However, this makes it very difficult for the filling machine to pick the carton blanks 14 and fill them with any substance since the carton blanks 14 are not at the same or expected position, which leads to among others the issues discussed above. So, by using the alignment device 10 as disclosed herein, the stack 14 will look like figure 2b. Here the carton blanks 14 have been aligned so that the first 141 and second edges of the carton blanks 14 are parallel. As seen in figure 2b this means that the length of the stack increases. The number of carton blanks 14 in figure 2a and 2b are the same for illustrative purposes.

In an example, the first alignment member, roller, 11 has a contact surface against the stacked carton blanks 14 of at least a part of a height and a thickness of one stacked carton blank 14. The use of the roller 11 with the contact surface of at least the thickness and part of the height of at least one of the carton blanks 14 the alignment device 10 pushes on each one of the carton blanks 14 individually to move them perpendicularly so that they get aligned. In an example, the contact surface against the carton blanks 14 is at least a part of the height of one carton blank and at least the thickness of a plurality of carton blanks 14. By contacting at least a part of the height of the carton blank 14 and contacting several carton blanks 14 at the same time the alignment of more carton blanks 14 are achieved at once. Further, the force required to align the carton blanks 14 when pushing on one or a few of the carton blanks 14 with the alignment device 10 is lower than if pushing at all or almost all at the same time. This is due to the shape of the carton blanks 14 and that they are thicker at the ends 141 than the rest of the carton blank 14 and therefore lock into to each other. They will then not be easily moved parallel to each other due to friction and the need to increase in the length X direction. Further, if more force is used to push on the carton blanks 14, trying to align the carton blanks 14 they will normally only bend and not align. In an example, the contact surface is the height of the carton blank 14.

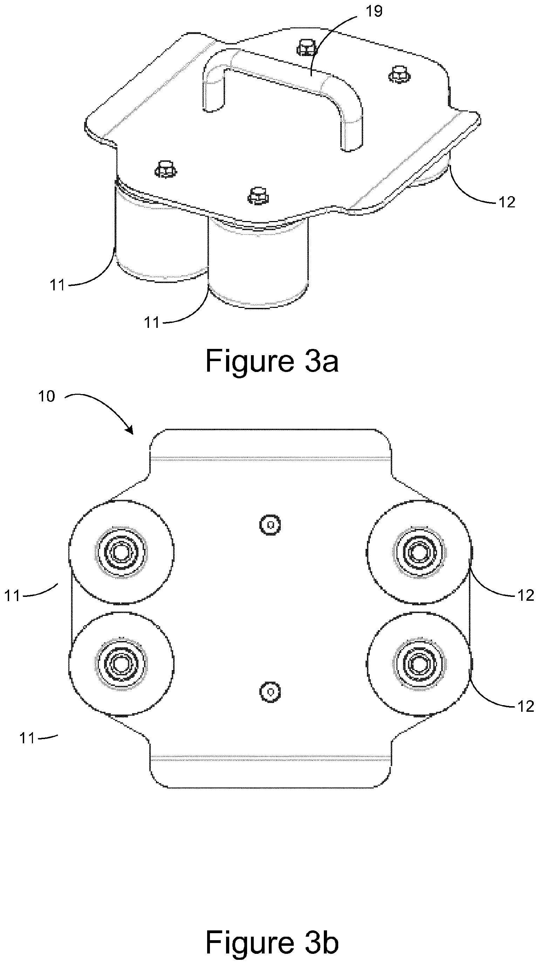

In an example not according to the claimed invention, as e.g. illustrated in figure 1a and 3a, the first 11 and the second 12 alignment members are a pair of rollers. By having a pair of rollers the alignment members 11 and 12 easily slide on the carton blank(s) 14 so that they push on both sides of the carton blank(s) 14 such that the carton blank(s) 14 is perpendicularly moved and will be aligned as discussed above. In an example not according to the claimed invention the first 11 and second 12 alignment members are any combination of rollers, such as the first alignment member 11 being one roller and the second alignment member 12 comprising two rollers, or e.g. as disclosed in figure 3b the first 11 and the second 12 alignment member comprises two rollers each. In an example not according to the claimed invention, each pair of the first and second alignment members 12 are spaced in the length direction X by a distance of a few cm, close enough to abut, or they comprise a cutout so that they interact with each other creating a less non-contacting surface between them. Other variants to reduce any non-contact surface between the first and/or second alignment members 11, 12 and the carton blanks 14 are easily envisaged as well. In an example not according to the claimed invention, the first 11 and second 12 alignment members push on different carton blanks 14. In an example not according to the claimed invention the carton blank 14 has twisted and one of the two rollers of the first alignment member 11 pushes on the first edge 141 of the carton blank 14. And, on the other edge of the carton blank 14, the roller 12 in a different row in the length direction X compared to the one roller 11 pushing on the first edge 141, the second alignment member 12 pushes on the second edge of the carton blank 14. By using the alignment device 10 having a plurality of rollers 11, 12 it is possible to align carton blanks 14 that have a high degree of twisting or otherwise is not parallel arranged in the stack of carton blanks 14.

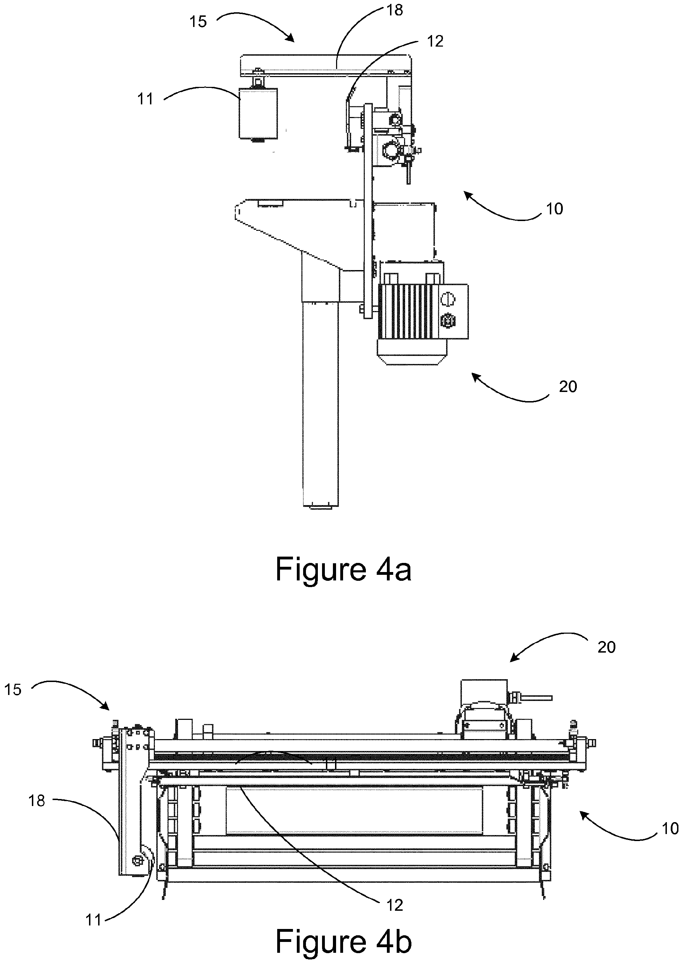

As e.g. illustrated in figures 4a-b, the second alignment member 12 is a fixed counter member. By having at least one roller 11 arranged on one side 141 of the carton blank 14 and the other side having a fixed counter member 12, the alignment device 10 is much simpler to construct since there is only one moving part, i.e. the at least one roller 11. Further, the fixed counter member 12 allows for the carton blanks 14 to slide on the fixed counter member 12 while being in contact with it in a length direction X. In an example, the fixed counter member 12 is a plate, railing, or an element having a large flat surface on which the carton blanks 14 can slide on. By having the fixed counter member 12 being the plate or any other of the objects the carton blanks 14 are pushed against a surface that easily allows for the carton blanks 14 to move when being pushed by the roller 11 sliding on the opposite side of the carton blank 14. This allows for the blanks 14 to more easily be aligned since the stack easily can move in the length direction X. In other examples, the fixed counter member 12 is a rod, a pipe, a plate having a curved shape or anything else that allows for the carton blanks 14 to be pushed against and at the same time slide on, without making any marks in the carton blank 14. In an example the fixed counter member 12 comprises a cutout, bend or only covers a part of the height of the carton blank 14 so that the carton blank can more easily be moved in a length direction X. This is due to a lower friction between the carton blank 14 and the fixed counter member 12 than if the fixed counter member 12 covers the entire height or almost the entire height of the carton blank 14.

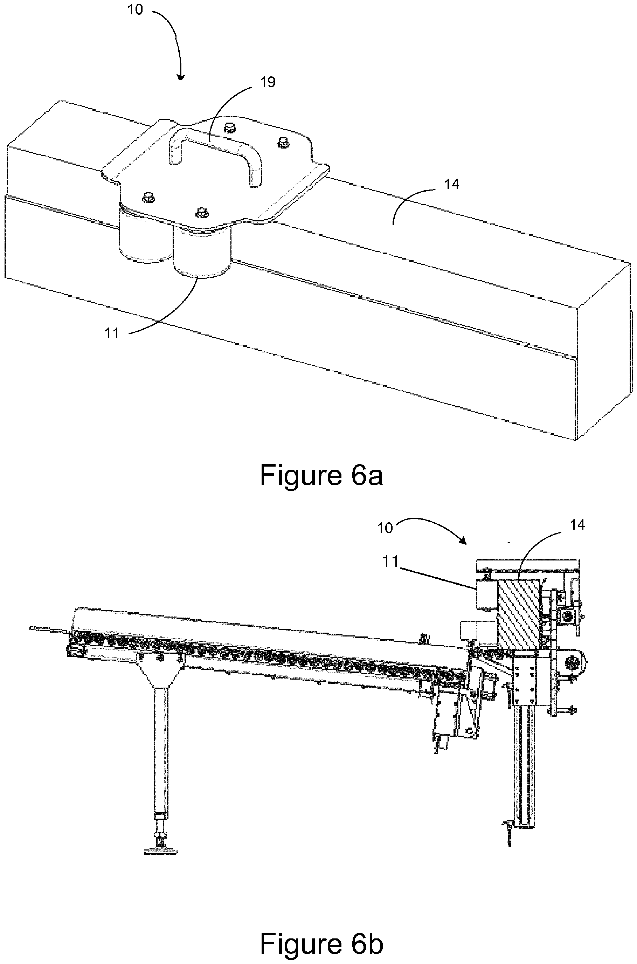

As e.g. illustrated in figures 4a-5b the first, alignment member, roller, 11 and the second alignment member, the fixed counter member, 12 are mechanically slidably connected by a sliding mechanism 15 for moving the roller 11 in a parallel direction to the fixed counter member 12. By having the roller 11 and the fixed counter member 12 being slidably connected by the sliding mechanism 15 the roller 11 can slide along the fixed counter member 12 and push on the carton blanks 14 arranged there between. In an example there is no mechanical connection between the first and second alignment member 11, 12. In an example the first alignment member 11, the roller, is simply rolled against the carton blank 14 and second alignment member 12 is arranged on the other side of the carton blank 14, fixed according to the claimed invention, or movable not according to the claimed invention, as discussed herein. In an example not according to the claimed invention, the first and second alignment members 11, 12 are rollers and connected with each other by a sliding mechanism 15 that allows them to move along the stack of carton blanks 14 and push on both sides of the carton blank 14. Illustrated in e.g. fig. 4a , the sliding mechanism 15 is attached to the fixed counter member 12, but other locations for attaching the sliding mechanism is envisaged. In an example the sliding mechanism 15 is attached to the infeed device and the alignment device 10 is comprised in the infeed device. In an example, an infeed machine for a filling filing machine comprises the alignment device 10 as e.g. illustrated in figure 6b.

In an example, as e.g. illustrated in figure 1a or 4a, at least the first 11 and second 12 alignment member or one of the first and second alignment members 11, 12 are mechanically connected by a connection member 18 such that any movement of one of the alignment members 11, 12 affects at least the other one 11, 12. By mechanically connecting the at least two alignment members 11, 12 with the connection member 18, and not according to the claimed invention, any movement on one of the alignment members 11, 12 affects the movement of at least one of the other of the alignment members 11, 12. This allows for a synchronized movement and/or translation of force from at least one alignment member 11, 12 to the other(s) 11, 12.

As e.g. illustrated in figures 4a-5b, the alignment device 10 further comprises a driving mechanism 20 for moving the first 11 alignment member. By having the driving mechanism 20, such as motor, it is possible to motorize and/or automate the alignment device 10 to align the carton blanks 14. Examples of driving mechanisms 20 are pneumatic, belt, chain, electric or other types of driving mechanisms.

In an example not covered by the claimed invention, illustrated in e.g. figure 1a and 6a, the connection member 18 comprises a gripping member 19 for gripping the alignment device 10 to manually align the carton blanks 14. By having the gripping member 19 an operator can easily manually use the alignment device 10 as a separate alignment device 10, or if placed in an infeed machine when not being motorized or if the motorization is broken as e.g. a safety back up.

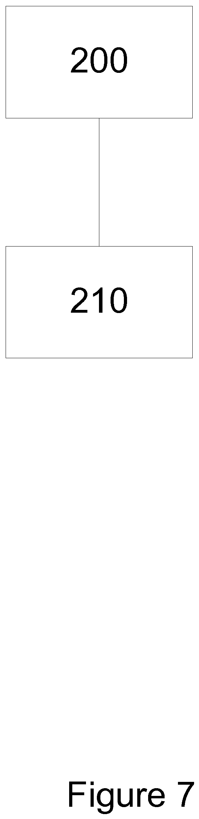

In an example, as illustrated in figure 7, a method of aligning a stack of carton blanks 14 in parallel is disclosed. The carton blank 14 comprises a first edge 141 and a second edge, the second edge positioned opposite the first edge 141 and the method comprises, providing 200 the alignment device 10. The method also comprises pulling and/or pushing 210 the alignment device 10 on the stacked carton blanks 14 so that they are aligned.

In an example, the method further comprises, moving the carton blanks 14 by the roller 11 having a contact surface against the stacked carton blanks 14 of at least a part of the height and at least a thickness of one carton blank 11.In an example, the method further comprises pushing and/or pulling in a substantially length direction X of the stacked carton blanks 14.

In an example, the method further comprises sliding by a sliding mechanism 15 the roller 11 in a parallel direction to a fixed counter member 12.In an example, the method further comprises moving the first alignment member 11 by a driving mechanism 20, such as a described above.

## Claims

1. An alignment device (10) for aligning stacked carton blanks, the carton blanks comprising a first edge (141) and a second edge, the second edge positioned opposite the first edge, the alignment device comprising
at least a first and a second alignment member (11, 12), wherein the first alignment member (11) is arranged adjacent to the first edge (141) and adapted to exert a force onto the first edge (141), wherein the second alignment member (12) is arranged opposite the second edge and adapted to exert a force onto the second edge, and wherein
the first alignment member (11) is a roller, **characterized in that** the second alignment member (12) is a fixed counter member

2. The alignment device (10) according to claim 1, wherein the first alignment member (11) has a contact surface against the stacked carton blank of at least a part of a height and a thickness of one stacked carton blank.

3. The alignment device (10) according to claim 1 or 2, wherein the fixed counter member (12) is a plate, railing, or an element having a large flat surface on which the carton blanks (14) can slide on.

4. The alignment (10) device according to any of the preceding claims, wherein the first alignment member (11) and the second alignment member (12) are mechanically slidably connected by a sliding mechanism (15) for moving the first alignment member (11) in a parallel direction to the second alignment member (12).

5. The alignment device (10) according to any of the preceding claims, wherein at least one of the first and second alignment members (11, 12) are mechanically connected by a connection member (18) such that any movement of one of the first alignment member (11) affects at least the other one.

6. The alignment device (10) according to any of the preceding claims, further comprising a driving mechanism (20) for moving the first second alignment member (11).

7. The alignment device (10) according to claim 5, wherein the connection member (18) comprises a gripping member (19) for gripping the alignment device to manually align the carton blanks.

8. An infeed machine for a filling filing machine or a filling machine comprising an alignment device (10) according to any one of claims 1-7.

9. A method of aligning a stack of carton blanks (14) in parallel, the carton blanks comprising a first edge (141) and a second edge, the second edge positioned opposite the first edge, the method comprises,
- providing an alignment device (10) comprising at least a first and a second alignment member (11, 12), wherein the first alignment member (11) is arranged adjacent to the first edge (141) and adapted to exert a force onto the first edge (141) and wherein the second alignment member (12) is arranged opposite the second edge and adapted to exert a force onto the second edge, wherein the first alignment member is a roller (11) and the second alignment member (12) is a fixed counter member; and
- pulling and/or pushing the alignment device on the stacked carton blanks so that they are aligned.

10. The method according to claim 9, comprising moving the carton blanks (14) by the roller (11) having a contact surface against the stacked carton blanks (14) of at least a part of the height and a thickness of one carton blank (14).

11. The method according to claim 9 or 10, comprising pushing and/or pulling in a substantially length direction of the stacked carton blanks (14).

12. The method according to any one of claims 9-11, comprising sliding by a sliding mechanism (15) the first alignment member (11) in a parallel direction to the second alignment member (12).

13. The method according to any one of claims 9-12, comprising moving the first alignment member (11) by a driving mechanism (20).

## Patentansprüche

1. Ausrichtungsvorrichtung (10) zum Ausrichten von gestapelten Kartonzuschnitten, wobei die Kartonzuschnitte eine erste Kante (141) und eine zweite Kante umfassen, wobei die zweite Kante der ersten Kante entgegengesetzt positioniert ist, wobei die Ausrichtungsvorrichtung mindestens ein erstes und ein zweites Ausrichtungselement (11, 12) umfasst, wobei das erste Ausrichtungselement (11) an die erste Kante (141) angrenzend angeordnet und dazu eingerichtet ist, eine Kraft auf die erste Kante (141) aufzubringen, wobei das zweite Ausrichtungselement (12) der zweiten Kante entgegengesetzt angeordnet und dazu eingerichtet ist, eine Kraft auf die zweite Kante aufzubringen, und wobei das erste Ausrichtungselement (11) eine Rolle ist, **dadurch gekennzeichnet, dass** das zweite Ausrichtungselement (12) ein festes Gegenelement ist.

2. Ausrichtungsvorrichtung (10) nach Anspruch 1, wobei das erste Ausrichtungselement (11) eine Kontaktfläche gegen den gestapelten Kartonzuschnitt mit zumindest einem Teil einer Höhe und einer Stärke eines gestapelten Kartonzuschnitts aufweist.

3. Ausrichtungsvorrichtung (10) nach Anspruch 1 oder 2, wobei das feste Gegenelement (12) eine Platte, eine Reling oder ein Element mit einer großen planen Fläche, auf der die Kartonzuschnitte (14) gleiten können, ist.

4. Ausrichtungsvorrichtung (10) nach einem der vorstehenden Ansprüche, wobei das erste Ausrichtungselement (11) und das zweite Ausrichtungselement (12) über einen Gleitmechanismus (15) mechanisch gleitbar verbunden sind, um das erste Ausrichtungselement (11) in paralleler Richtung zum zweiten Ausrichtungselement (12) zu bewegen.

5. Ausrichtungsvorrichtung (10) nach einem der vorstehenden Ansprüche, wobei das erste und/oder zweite Ausrichtungselement (11, 12) über ein Verbindungselement (18) mechanisch verbunden sind, sodass jegliche Bewegung eines des ersten Ausrichtungselements (11) zumindest das andere beeinflusst.

6. Ausrichtungsvorrichtung (10) nach einem der vorstehenden Ansprüche, ferner umfassend einen Antriebsmechanismus (20) zum Bewegen des ersten zweiten Ausrichtungselements (11).

7. Ausrichtungsvorrichtung (10) nach Anspruch 5, wobei das Verbindungselement (18) ein Greifelement (19) zum Greifen der Ausrichtungsvorrichtung zum manuellen Ausrichten der Kartonzuschnitte umfasst.

8. Zuführmaschine für eine Füllmaschine oder Füllmaschine umfassend eine Ausrichtungsvorrichtung (10) nach einem der Ansprüche 1-7.

9. Verfahren zum parallelen Ausrichten eines Stapels Kartonzuschnitte (14), wobei die Kartonzuschnitte eine erste Kante (141) und eine zweite Kante umfassen, wobei die zweite Kante der ersten Kante entgegengesetzt positioniert ist, wobei das Verfahren Folgendes umfasst:
- Vorsehen einer Ausrichtungsvorrichtung (10), umfassend mindestens ein erstes und ein zweites Ausrichtungselement (11, 12), wobei das erste Ausrichtungselement (11) an die erste Kante (141) angrenzend angeordnet und dazu eingerichtet ist, eine Kraft auf die erste Kante (141) aufzubringen, und wobei das zweite Ausrichtungselement (12) der zweiten Kante entgegengesetzt angeordnet und dazu eingerichtet ist, eine Kraft auf die zweite Kante aufzubringen, wobei das erste Ausrichtungselement eine Rolle (11) ist und das zweite Ausrichtungselement (12) ein festes Gegenelement ist; und
- Ziehen und/oder Schieben der Ausrichtungsvorrichtung auf die gestapelten Kartonzuschnitte, sodass diese ausgerichtet werden.

10. Verfahren nach Anspruch 9, umfassend Bewegen der Kartonzuschnitte (14) mittels der Rolle (11), die eine Kontaktfläche gegen die gestapelten Kartonzuschnitte (14) mit zumindest einem Teil der Höhe und einer Stärke eines Kartonzuschnitts (14) aufweist.

11. Verfahren nach Anspruch 9 oder 10, umfassend Schieben und/oder Ziehen im Wesentlichen in einer Längsrichtung der gestapelten Kartonzuschnitte (14).

12. Verfahren nach einem der Ansprüche 9-11, umfassend Gleiten des ersten Ausrichtungselements (11) in eine parallele Richtung zum zweiten Ausrichtungselement (12) mittels eines Gleitmechanismus (15).

13. Verfahren nach einem der Ansprüche 9-12, umfassend Bewegen des ersten Ausrichtungselements (11) mittels eines Antriebsmechanismus (20).

## Revendications

1. Dispositif d'alignement (10) destiné à aligner des ébauches de carton empilées, les ébauches de carton comprenant un premier bord (141) et un second bord, le second bord étant positionné en regard du premier bord, le dispositif d'alignement comprenant au moins un premier et un second élément d'alignement (11, 12), le premier élément d'alignement (11) étant disposé adjacent au premier bord (141) et conçu pour exercer une force sur le premier bord (141), le second élément d'alignement (12) étant disposé en regard du second bord et conçu pour exercer une force sur le second bord, et le premier élément d'alignement (11) étant un rouleau,
**caractérisé en ce que** le second élément d'alignement (12) est un contre-élément fixe.

2. Dispositif d'alignement (10) selon la revendication 1, le premier élément d'alignement (11) ayant une surface de contact avec l'ébauche de carton empilée d'au moins une partie de la hauteur et de l'épaisseur d'une ébauche de carton empilée.

3. Dispositif d'alignement (10) selon la revendication 1 ou 2, le contre-élément fixe (12) étant une plaque, un rail ou un élément présentant une grande surface plane sur laquelle les ébauches de carton (14) peuvent glisser.

4. Dispositif d'alignement (10) selon l'une quelconque des revendications précédentes, le premier élément d'alignement (11) et le second élément d'alignement (12) étant reliés mécaniquement de manière coulissante par un mécanisme coulissant (15) pour déplacer le premier élément d'alignement (11) dans une direction parallèle au second élément d'alignement (12).

5. Dispositif d'alignement (10) selon l'une quelconque des revendications précédentes, au moins un des premier et second éléments d'alignement (11, 12) étant relié mécaniquement par un élément de liaison (18) de sorte que tout mouvement de l'un du premier élément d'alignement (11) affecte au moins l'autre.

6. Dispositif d'alignement (10) selon l'une quelconque des revendications précédentes, comprenant en outre un mécanisme d'entraînement (20) destiné à déplacer le premier second élément d'alignement (11).

7. Dispositif d'alignement (10) selon la revendication 5, l'élément de liaison (18) comprenant un élément de préhension (19) pour saisir le dispositif d'alignement afin d'aligner manuellement les ébauches de carton.

8. Machine d'alimentation destinée à une machine de remplissage ou une machine de remplissage comprenant un dispositif d'alignement (10) selon l'une quelconque des revendications 1 à 7.

9. Procédé d'alignement d'une pile d'ébauches de carton (14) en parallèle, les ébauches de carton comprenant un premier bord (141) et un second bord, le second bord étant positionné en regard du premier bord, le procédé comprenant les étapes consistant à,
fournir un dispositif d'alignement (10) comprenant au moins un premier et un second élément d'alignement (11, 12), le premier élément d'alignement (11) étant disposé adjacent au premier bord (141) et étant conçu pour exercer une force sur le premier bord (141) et le second élément d'alignement (12) étant disposé en regard du second bord et conçu pour exercer une force sur le second bord, le premier élément d'alignement étant un rouleau (11) et le second élément d'alignement (12) étant un contre-élément fixe ; et
tirer et/ou pousser le dispositif d'alignement sur les ébauches de carton empilées afin de les aligner.

10. Procédé selon la revendication 9, comprenant l'étape consistant à déplacer les ébauches de carton (14) à l'aide du rouleau (11) ayant une surface de contact contre les ébauches de carton empilées (14) d'au moins à une partie de la hauteur et de l'épaisseur d'une ébauche de carton (14).

11. Procédé selon la revendication 9 ou 10, comprenant l'étape consistant à pousser et/ou à tirer les ébauches de carton empilées (14) dans sensiblement le sens de la longueur.

12. Procédé selon l'une quelconque des revendications 9 à 11, comprenant l'étape consistant à faire coulisser par un mécanisme de glissement (15) le premier élément d'alignement (11) dans une direction parallèle au second élément d'alignement (12).

13. Procédé selon l'une quelconque des revendications 9 à 12, comprenant l'étape consistant à déplacer le premier élément d'alignement (11) au moyen d'un mécanisme d'entraînement (20).
